# EUROPÄISCHE PATENTSCHRIFT

(11) **EP 2 544 786 B1**
(45) Veröffentlichungstag und Bekanntmachung des Hinweises auf die Patenterteilung: **20.04.2016**
(21) Anmeldenummer: 11704953.6
(22) Anmeldetag: 09.02.2011
(51) Int. Cl.: B01D 21/00, B23Q 11/00

(54) **SCHWERKRAFTABSCHEIDER ZUM TRENNEN VON SPÄNEN UND KÜHLSCHMIERSTOFFEN**
GRAVITY SEPARATOR FOR SEPARATING CUTTING CHIPS AND COOLING LUBRICANTS
SÉPARATEUR PAR GRAVITÉ POUR LA SÉPARATION DE COPEAUX ET DE LUBRIFIANTS RÉFRIGÉRANTS

(30) Priorität: 08.03.2010 DE 102010010572
(43) Veröffentlichungstag der Anmeldung: 16.01.2013
(73) Patentinhaber: Mahle International GmbH, 70376 Stuttgart (DE)
(72) Erfinder: KÜBLER, Udo, 74613 Öhringen (DE); RÖDIGER, Fritz, 74257 Untereisesheim (DE); STÖTZER, Dietrich, 74613 Öhringen (DE); VOGELMANN, Rudolf, 74626 Bretzfeld (DE); WEINMANN, Uwe, 74243 Langebrettach (DE)
(74) Vertreter: BRP Renaud & Partner mbB Rechtsanwälte Patentanwälte Steuerberater
(86) Internationale Anmeldenummer: PCT/EP2011/051872
(87) Internationale Veröffentlichungsnummer: WO 2011/110396

(56) Entgegenhaltungen:
- WO-A1-95/30486
- DE-B- 1 203 192
- GB-A- 909 801
- US-A- 3 616 925
- US-A- 4 165 283
- US-A1- 2003 075 489

## Beschreibung

Die vorliegende Erfindung betrifft einen Trockenseparator, insbesondere zum Separieren von Feststoffen, wie bspw. Spänen, aus einem Fluid, wie bspw. aus Kühl-/Schmiermitteln.

Trockenseparatoren werden üblicherweise dazu verwendet, feste (Schweb-)stoffe aus einem Fluid abzuscheiden, diese zu trocknen und in getrockneter Form zu separieren. Angewendet werden derartige Trockenseparatoren bspw. in der Metallbearbeitung, bei welcher Kühl- und/oder Schmiermittel oftmals mit Feststoffen, wie bspw. Metallspäne oder ähnlichem verunreinigt werden. Hierbei werden die Kühl- und/oder Schmiermittel üblicherweise gefiltert, wobei das gefilterte Fluid erneut dem Metallbearbeitungsprozess zugeführt wird, während die herausgefilterten Feststoffe, wie bspw. die Späne, getrocknet und in getrockneter Form abgeschieden werden. Das Trocknen erfolgt dabei üblicherweise über saugende Materialien, wie bspw. papierähnliche Werkstoffe, die das an den Spänen noch anhaftende Fluid aufsaugen und dadurch die Späne trocknen. Der Verbrauch von saugendem Papier bei derartigen Trockenseparatoren ist jedoch vergleichsweise hoch, was den Separierprozess an sich teuer und gleichzeitig aufwändig macht.

Aus der US 3,616,925 A ist ein gattungsgemäßer Trockenseparator mit zumindest einem Sedimentationstank und einem Zulauf bekannt, über welchen ein Feststoff beladenes Fluid oberhalb einer im Sedimentationstank angeordneten Rutsche auf diese einfüllbar ist. Am unteren Ende der Rutsche ist ein Auslass vorgesehen, dem ein Filter vorgeschaltet ist. Der Ablauf ist dabei von einem Verschlusselement verschließbar.

Aus der US 2003/0075489 A1 ist ein weiterer Trockenseparator mit zumindest einem Sedimentationstank und einem Zulauf bekannt, über welchen Feststoff beladenes Fluid oberhalb einer im Sedimentationstank angeordneten Rutsche auf diese einfüllbar ist. Der bekannte Trockenseparator weist zusätzlich eine am unteren Ende der Rutsche vorgesehenen Sedimentationsraum auf, wobei ein Absaugen des zumindest teilweise gereinigten Fluids am oberen Ende des Sedimentationsraums erfolgt.

Die vorliegende Erfindung beschäftigt sich daher mit dem Problem, für einen Trockenseparator eine verbesserte Ausführungsform anzugeben, die einerseits eine hohe Separierleistung aufweist und andererseits einen kostengünstigen Betrieb ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Trockenseparieren von Feststoffen, wie bspw. Metallspänen, aus einem Fluid, wie bspw. aus Kühl-/Schmiermittel, durch einen Sedimentationsprozess und einen sich daran anschließenden Trocknungsprozess zu erreichen. Der erfindungsgemäße Trockenseparator weist hierzu einen Sedimentationstank auf, der über einen Zulauf mit feststoffbeladenem Fluid befüllbar ist. Der Zulauf mündet dabei oberhalb einer in dem Sedimentationstank angeordneten Rutsche, sodass das feststoffbeladene Fluid beim Befüllen des Sedimentationstanks von oben auf die Rutsche strömt. Am unteren Ende der Rutsche ist dabei ein Sedimentationsraum mit einer Absaugpumpe angeordnet, der ein Filter vorgeschaltet ist. Bodenseitig des Sedimentationsraums ist darüber hinaus ein mittels eines Verschlusselementes verschließbarer Auslass vorgesehen, wobei eine Förderschnecke bodenseitig mit diesem Auslass verbunden ist. Das Separieren der im Fluid mitgeführten Feststoffpartikel erfolgt dabei wie folgt: Zunächst wird das feststoffbeladene Fluid über den Zulauf auf die Rutsche im Sedimentationstank geleitet, wobei an der Rutsche sowohl das Fluid als auch die darin enthaltenen Feststoffpartikel langsam nach unten in den Sedimentationsraum rutschen. Im Sedimentationsraum wiederum sedimentieren die im Fluid mitgeführten Feststoffpartikel und setzen sich somit bodenseitig des Sedimentationsraums ab. Oberhalb des Bodens im Sedimentationsraum ist dabei eine Absaugpumpe kommunizierend mit dem Sedimentationsraum verbunden, sodass bei einem Betrieb der Absaugpumpe diese bereits durch die Sedimentation vorgereinigtes Fluid aus dem Sedimentationsraum absaugen kann. Um dennoch eine Verunreinigung mit zum Teil in diesem vorgereinigten Fluid noch enthaltenen Feststoffpartikeln zuverlässig ausschließen zu können, ist der Absaugpumpe ein Kantenspaltfilter vorgeschaltet. Die Absaugpumpe kann dabei sofort nach Beschickung des Trockenseparators gestartet werden, wobei keine Verweilzeiten für eine natürliche Sedimentation (Zwangssedimentation) erforderlich sind. Der der Absaugpumpe vorgeschaltete Filter reinigt während des Abpumpvorgangs diesen kontinuierlich ab, wobei durch die saugseitige Anordnung des Filters in Bezug auf die Absaugpumpe nur geringe Differenzdrücke, bspw. maximal 300 mbar, entstehen, sodass ein Verblocken des Filters vorzugsweise gänzlich ausgeschlossen werden kann. Die im Sedimentationsraum verbleibende Restflüssigkeit weist nunmehr eine sehr hohe Feststoffkonzentration auf, welche bspw. bei Graugussspänen zu einer Agglomeration der einzelnen Graugusspartikel führt. Anschließend wird temporär oder bei Erreichen eines vordefinierten Grenzwertes von sich bodenseitig des Sedimentationstanks ansammelnden Feststoffpartikel das bodenseitig angeordnete Verschlusselement geöffnet, woraufhin schwallartig hoch mit Feststoffpartikeln beladenes Fluid in den Auslass strömt. Durch den Schwall werden auch größere, im Trockenseparator aussedimentierte Partikel (Späne) in die darunter liegende Förderschnecke mitgerissen, wodurch eine Brückenbildung im Trockenseparator wirkungsvoll ausgeschlossen werden kann. Der Auslass kann dabei in der Art einer Trogschnecke ausgebildet sein oder mit einer derartigen in Verbindung stehen. Anschließend wird das Verschlusselement, welches bspw. als Klappenschieber ausgebildet ist, geschlossen, und die bodenseitig mit dem Auslass, respektive mit dem Förderschneckentrog, verbundene Förderschnecke angefahren. Für eine optimale Durchmischung (Aufbrechen von Agglomeraten) und somit einer bestmöglichen Trocknung, wird die Förderschnecke im Pendelschrittverfahren, das heißt zusätzlich translatorisch, bewegt, wobei die Förderschnecke derartig konzipiert ist, dass mit vergleichsweise kurzer Baulänge ein möglichst hoher Trocknungsgrad erreicht wird. Darüber hinaus sind sowohl die Rutsche als auch die Förderschnecke vorzugsweise derart ausgelegt, dass sie mit unterschiedlichsten Materialien und Körnungen beschickt und dadurch unterschiedlichste Materialien und Feststoffpartikel separieren können. Hierfür ist die Förderschnecke vorzugsweise einseitig gelagert und zugleich seelenlos ausgeführt, was ein Verblocken vorzugsweise gänzlich ausschließt. Vor dem erneuten Öffnen des Verschlusselementes und damit vor einem erneuten Beschicken der Förderschnecke mit im Sedimentationsraum gesammeltem Restfluid, wird das noch im unteren Bereich der Förderschnecke verbliebene Restfluid abgepumpt, beispielsweise in ein nicht gezeigtes Reservoir. Gleichzeitig wird die Förderschnecke zumindest so weit weitergedreht, dass die separierten und getrockneten Feststoffpartikel aus dem Bereich des Verschlusselementes herausgefördert werden und bei einem erneuten Öffnen des Verschlusselementes nicht mehr mit neuem und noch zu reinigenden Restfluid in Kontakt treten.

Bei einer vorteilhaften Weiterbildung der erfindungsgemäßen Lösung, ist im Bereich der Förderschnecke eine Trocknungs- und/oder eine Heizeinrichtung angeordnet. Während des langsamen Förderns der Feststoffpartikel auf der Förderschnecke, kann ein Trocken derselben funktional durch eine Trocknungs- und/oder eine Heizeinrichtung positiv beeinflusst werden, wobei die Trocknungs- /Heizeinrichtung bspw. als Gebläse oder als Heizung ausgebildet sein kann. Die Trocknungs-/Heizeinrichtung kann dabei selbstverständlich auch lediglich dann zugeschaltet werden, wenn bspw. der Separationsprozess beschleunigt werden soll.

Die generellen Vorteile des erfindungsgemäßen Trockenseparators liegen in der geringen Restfeuchte der abgeschiedenen Feststoffpartikel, welche in abgeschiedenem Zustand vorzugsweise als rieselfähiges Granulat vorliegen, ebenso wie in einem vollautomatischen Betrieb, das heißt einer Betriebsweise, die weder Manpower noch Wartungsaufwand erfordert. Zudem benötigt der erfindungsgemäße Trockenseparator keine große Verweildauer des zu reinigenden Fluids und der zu sedimentierenden Feststoffe, wodurch eine vergleichsweise hohe Separiergeschwindigkeit erreicht werden kann. Von besonderem Vorteil dürfte jedoch sein, dass der erfindungsgemäße Trockenseparator kein Verbrauchsmaterial, wie bspw. Papier, benötigt, was bisher zu hohen Kosten geführt hat.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen erfindungsgemäßen Trockenseparator in einer Schnittdarstellung,
- Fig. 2: eine teilweise geschnittene Ansicht des erfindungsgemäßen Trockenseparators,
- Fig. 3: eine Darstellung wie in Fig. 2, jedoch aus einer anderen Ansicht.

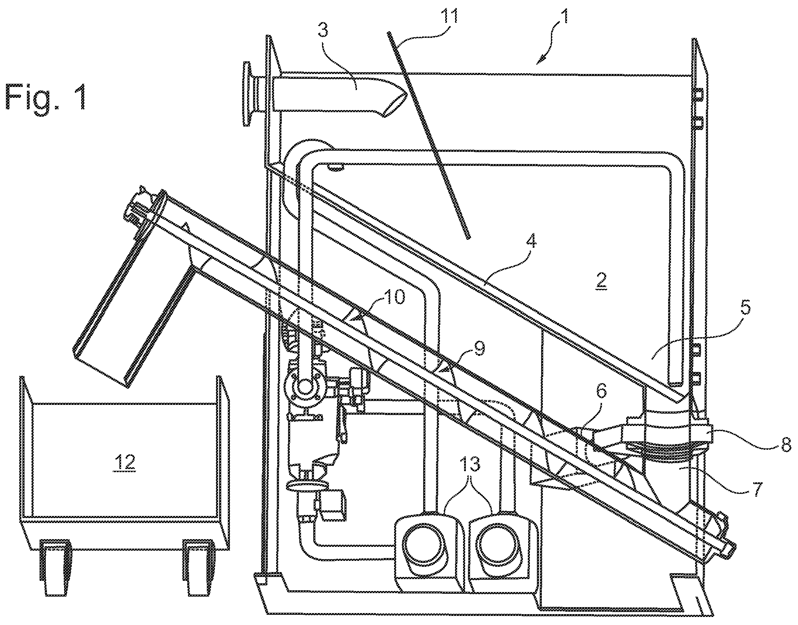

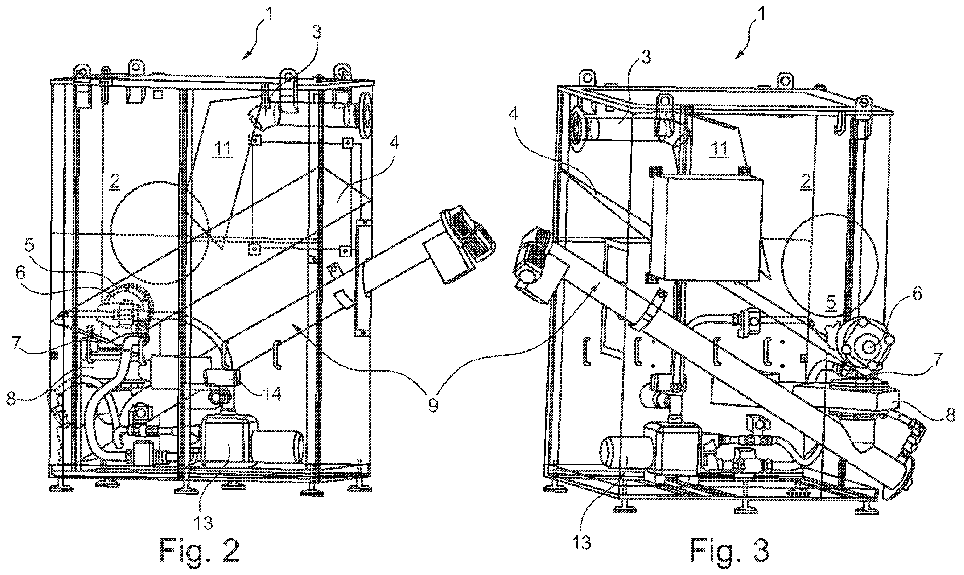

Entsprechend den Figuren 1 bis 3, weist ein erfindungsgemäßer Trockenseparator 1 zum Separieren von Feststoffen, wie bspw. von Stahlspänen, Gussspänen, Aluminiumspänen oder Schleifstaub aus einem Fluid, wie bspw. aus einem Kühl- und/oder Schmiermittel, zumindest einen Sedimentationstank 2 sowie einen Zulauf 3 auf, über welchen feststoffbeladenes Fluid oberhalb einer im Sedimentationstank 2 angeordneten Rutsche 4 auf diese einfüllbar ist. An einem unteren Ende der Rutsche 4 ist darüber hinaus ein Sedimentationsraum 5 vorgesehen, aus dem mittels einer Absaugpumpe 13 durch Sedimentation bereits zumindest vorgereinigtes Fluid abgesaugt werden kann. Der Absaugpumpe 13 vorgeschaltet ist dabei ein ein Kantenspaltfilter 6, um noch nicht sedimentierte und dadurch mit angesaugte Feststoffe vor dem Eintrittt in die Absaugpumpe 13 herauszufiltern und eine Beschädigung oder einen erhöhten Verschleiß der Absaugpumpe 13 zu vermeiden. Bodenseitig des Sedimentationsraums 5 ist dabei ein Auslass 7 angeordnet, der mittels eines Verschlusselementes 8, bspw. eines Austragschiebers, verschließbar ist. Darüber hinaus ist eine Förderschnecke 9 vorgesehen, die bodenseitig mit dem Auslass 7 verbunden ist. Abgesehen von dieser Förderschnecke 9 sind bei dem erfindungsgemäßen Trockenseparator 1 keine zusätzlichen mechanischen Bauteile, wie bspw. Kratzer oder Magnetabscheider, erforderlich. Stattdessen sollen die im Fluid mitgeführten Feststoffe durch Schwerkraft ausgetragen werden, wobei das einströmende Fluid gleichzeitig dazu genutzt wird, um die auf der Rutsche 4 sedimentierten Feststoffpartikel sicher aus dem Sedimentationstank 2 in den Auslass 7 zu spülen.

Die Förderschnecke 9 kann bspw. seelenlos ausgebildet und einseitig gelagert sein, um einerseits ein Verkanten zu vermeiden und andererseits um die Feststoff-Fluidtrennung zu fördern. Selbstverständlich können dabei die einzelnen Flügelränder 10 der Förderschnecke 9 entsprechend modifiziert sein, um zusätzlich ein verstärktes Rollieren der Feststoffpartikel zu erreichen.

An einem dem Auslass 7 entgegengesetzten Ende der Förderschnecke 9 kann darüber hinaus eine nicht gezeigte Pelletiereinrichtung zum Agglomerieren der abgeschiedenen Feststoffpartikel vorgesehen werden. Ebenso vorgesehen sein kann optional eine Trocknungs- und/oder Heizeinrichtung, welche vorzugsweise im oberen Bereich der Förderschnecke 9 angeordnet ist. Gegenüber dem Zulauf 3 ist darüber hinaus vorzugsweise eine Prallwand 11 angeordnet, die den dem Trockenseparator 1 zugeführten Fluidstrom auf die Rutsche 4 lenkt. Wie den Figuren 1 bis 3 dabei zu entnehmen ist, ist der Zulauf 3 vorzugsweise in Richtung des Auslasses 7 orientiert, wobei die Förderschnecke 9 eine Neigung von ca. 30° aufweist.

Der erfindungsgemäße Trockenseparator 1 funktioniert dabei wie folgt: Zunächst wird das mit Feststoff beladene Fluid über den Zulauf 3 in den Sedimentationstank 2 des Trockenseparators 1 eingefüllt, wobei zur Reduzierung von kinetischer Energie der einströmende Fluidstrom mittels der dargestellten Prallwand 11 auf die Rutsche 4 umgelenkt wird, wodurch zugleich ein Aussedimentieren von großen Feststoffpartikeln vermieden werden kann. Spätestens bei einer erneuten Beschickung des Trockenseparators 1 mit feststoffbeladenem Fluid werden dabei Schmutzansammlungen von vorangegangenen Beschickungen wieder weggespült.

Die Feststoffe rutschen somit langsam entlang der Rutsche 4 in den Sedimentationsraum 5, wodurch ein Aufkonzentrieren der sedimentationsfähigen Feststoffpartikel im Sedimentationsraum 5 und direkt oberhalb des Verschlusselementes 8 erfolgt. Die Absaugpumpe 13 kann dabei sofort nach Beschickung des Trockenseparators 1 gestartet werden, wobei keine Verweilzeiten für eine natürliche Sedimentation (Zwangssedimentation) erforderlich sind. Während des Abpumpvorgangs reinigt der der Absaugpumpe 13 vorgeschaltete Kantenspaltfilter 6 den abgesaugten Fluidstrom kontinuierlich ab, wobei durch die saugseitige Anordnung des Filters 6 nur geringe Differenzdrücke entstehen, die vorzugsweise auf 300 Millibar begrenzt sind. Ein Verblocken des Kantenspaltfilters 6 kann somit vorzugsweise gänzlich ausgeschlossen werden. Die im Sedimentationstank 5 verbliebene Restfluidmenge weist nunmehr eine sehr hohe Feststoffkonzentration auf, welche z. B. bei Graugussspänen zur Agglomeration der Feststoffpartikel führt. Die unterhalb des Verschlusselementes 8 angeordnete Förderschnecke 9 wird selbstverständlich vor dem Öffnen des Verschlusselementes 8 entleert bzw. gesäubert. Beim Öffnen des Verschlusselementes 8 strömt die im Trockenseparator 1 verbliebene Restfluidmenge schwallartig mit hoher Strömungsgeschwindigkeit auf die Förderschnecke 9, wobei durch den Schwall auch größere im Trockenseparator 1 aussedimentierte Partikel (Späne) in die Förderschnecke 9 mitgerissen werden. Eine Brückenbildung im Trockenseparator 1 kann somit ausgeschlossen werden.

Nach Befüllen der Förderschnecke 9 wird diese mit Schließen des Verschlusselementes 8 angefahren, wobei für eine optimale Durchmischung (Aufbrechen von Agglomeraten) und somit einer bestmöglichen Trocknung die Betriebsweise der Förderschnecke 9 im Pendelschrittverfahren ausgelegt ist. Die Förderschnecke 9 ist generell so konzipiert, dass mit möglichst geringer Baulänge ein möglichst hoher Trocknungsgrad erreicht werden kann. Generell ist die Förderschnecke 9 auch so ausgebildet, dass diese mit unterschiedlichsten Materialien und Körnungen beschickt werden kann, wofür die Förderschnecke 9 einseitig gelagert und seelenlos ausgebildet ist, was ein Verblocken vorzugsweise ausschließt. Dies bewirkt, dass der Trockenseparator 1 nach heutigem Stand nicht auf jeden Werkstoff neu eingestellt werden muss, sondern mit einer voreingestellten Steuerung betrieben werden kann.

Durch ein sehr langsames Drehen der Förderschnecke 9 werden nun die Feststoffpartikel nach oben gehoben und währenddessen getrocknet, sodass sie am anderen Ende der Förderschnecke 9 rieselfähig in eine bereitgestellte Lore 12 bzw. einen bereitgestellten Behälter abgefüllt werden können. Im unteren Bereich der Förderschnecke 9 verbleibt das von den Feststoffpartikeln gereinigte Restfluid. Vor dem erneuten Öffnen des Verschlusselementes 8 und damit vor einem erneuten Beschicken der Förderschnecke 9 mit im Sedimentationsraum 5 gesammeltem Restfluid, wird das noch im unteren Bereich der Förderschnecke 9 verbliebene Restfluid abgepumpt, beispielsweise in ein nicht gezeigtes Reservoir. Gleichzeitig wird die Förderschnecke 9 zumindest so weit weitergedreht, dass die darauf separierten und getrockneten Feststoffpartikel bei einem erneuten Öffnen des Verschlusselementes 8 nicht mehr mit neuem und noch zu reinigendem Restfluid in Kontakt treten. Ist der untere Bereich der Förderschnecke 9 entleert, kann die Förderschnecke erneut beschickt werden. Die Antriebsgeschwindigkeit der Förderschnecke 9 steuert dabei den Trocknungsgrad der separierten Feststoffpartikel, wobei zur Beschleunigung der Trocknung zusätzlich eingangs erwähnte Trocknungs- und/oder Heizeinrichtung, insbesondere in einem oberen Bereich der Förderschnecke 9, vorgesehen werden kann. Denkbar ist auch, dass am Ende der Förderschnecke 9 eine nicht gezeigte Pelletiereinrichtung vorgesehen ist, welche aus den Feststoffpartikeln Pellets presst und dadurch den Verkauf erleichtert.

Von der Absaugpumpe 13 aus kann das abgesaugte und gereinigte Fluid einem Reservoir oder aber beispielsweise wieder dem Sedimentiertank 2 oberhalb der Rutsche 4 (vgl. Fig.1) zugeführt werden. Hierzu kann eine Ventileinrichtung 14 vorgesehen sein, die den Fluidstrom entsprechend lenkt.

Generell weist der erfindungsgemäße Trockenseparator 1 folgende Vorteile auf:
- Geringe Restfeuchte der abgeschiedenen Feststoffpartikel, rieselförmiges Granulat,
- Verwendung von einfachen Filtern, wobei eine Filterschärfe selbst eingestellt werden kann,
- automatischer Betrieb, kein Wartungsaufwand und keine Manpower erforderlich,
- kein Verbrauchsmaterial, wie bspw. Papier zum Trocknen der abgeschiedenen Feststoffpartikel,
- Komplettierung eines Automatikfiltersystems,
- keine große Verweildauer der separierten Feststoffpartikel (Zwangssedimentation).

## Patentansprüche

1. Trockenseparator (1), insbesondere zum Separieren von Feststoffen wie Spänen aus einem Fluid, wie beispielsweise aus Kühl-/Schmiermitteln, mit zumindest
- einem Sedimentationstank (2),
- einem Zulauf (3), über welchen feststoffbeladenes Fluid oberhalb einer im Sedimentationstank (2) angeordnete Rutsche (4) auf diese einfüllbar ist,
**dadurch gekennzeichnet, dass**
- am unteren Ende der Rutsche (4) ein Sedimentationsraum (5) mit einer Absaugpumpe (13) angeordnet ist, der ein Kantenspaltfilter (6) vorgeschaltet ist,
- bodenseitig des Sedimentationsraums (5) ein mittels eines Verschlusselementes (8) verschließbarer Auslass (7) angeordnet ist, wobei unterhalb des Verschlusselementes (8) eine Förderschnecke (9) angeordnet ist, die bodenseitig mit dem Auslass (7) verbunden ist,
- eine Antriebseinrichtung zum Drehen der Förderschnecke (9) vorgesehen ist, die die Förderschnecke (9) zugleich pendelschrittartig, das heißt zusätzlich translatorisch, bewegt.

2. Trockenseparator nach Anspruch 1,
**dadurch gekennzeichnet,**
**dass** der der Absaugpumpe (13) vorgeschaltete Kantenspaltfilter (6) selbstreinigend ist.

3. Trockenseparator nach Anspruch 1 oder 2,
**dadurch gekennzeichnet,**
**dass** die Förderschnecke (9) seelenlos ausgebildet ist.

4. Trockenseparator nach einem der Ansprüche 1 bis 3,
**dadurch gekennzeichnet,**
**dass** die Förderschnecke (9) einseitig gelagert ist.

5. Trockenseparator nach einem der Ansprüche 1 bis 4,
**dadurch gekennzeichnet,**
**dass** an einem dem Auslass (7) entgegen gesetzten Ende der Förderschnecke (9) eine Pelletiereinrichtung zum Agglomerieren der abgeschiedenen Feststoffpartikel vorgesehen ist.

6. Trockenseparator nach einem der Ansprüche 1 bis 5,
**dadurch gekennzeichnet,**
**dass** im Bereich der Förderschnecke (9) eine Trocknungs- und/oder eine Heizeinrichtung angeordnet ist.

7. Trockenseparator nach einem der Ansprüche 1 oder 6,
**dadurch gekennzeichnet**,
dem Zulauf (3) gegenüber eine Prallwand (11) angeordnet ist, die den dem Trockenseparator (1) zugeführten Fluidstrom auf die Rutsche (4) umlenkt.

8. Trockenseparator nach einem der Ansprüche 1 bis 7,
**dadurch gekennzeichnet,**
**dass** der Zulauf (3) in Richtung des Auslasses (7) orientiert ist.

9. Trockenseparator nach einem der Ansprüche 1 bis 8,
**dadurch gekennzeichnet,**
**dass** die Förderschnecke (9) eine Neigung von ca. 30° aufweist.

## Claims

1. Dry separator (1), more particularly for separating solids such as shavings from a fluid, such as, for example coolants/lubricants with at least
- one sedimentation tank (2)
- an inlet (3) via which solids-laden fluid can be filled from above onto a slide (4) arranged in the sedimentation tank (2),
**characterised in that**
- arranged at the lower end of the slide (4) is a sedimentation space (5) with an exhaust pump (13), upstream of which there is an edge split filter (6),
- arranged at the base of the sedimentation space (5) is an outlet (7) which can be closed by means of a closing element (8), wherein underneath the closing element (8) a screw conveyor (9) is arranged, which at the base is connected with the outlet (7),
- an actuator device for turning the screw conveyor (9) is provided which simultaneously moves the screw conveyor (9) in a pendular step-like manner, i.e. also in a translational manner.

2. Dry separator according to claim 1
**characterised in that**
the edge split filter (6) upstream of the exhaust pump (13) is self-cleaning.

3. Dry separator according to claim 1 or 2
**characterised in that**
the screw-conveyer (9) is shaftless.

4. Dry separator according to any one of claims 1 to 3,
**characterised in that**
the screw conveyor (9) is unilaterally supported.

5. Dry separator according to any one of claims 1 to 4
**characterised in that**
provided at an end of the screw conveyor (9) opposite the outlet (7) is a pelleting device for agglomerating the separated solid particles.

6. Dry separator according to any one of claims 1 to 5,
**characterised in that**
a drying and/or heating device is arranged in the area of the screw conveyor (9).

7. Dry separator according to any one of claims 1 or 6
**characterised in that**
arranged opposite the inlet (3) is a baffle (11) which deflects the fluid flow supplied to the dry separator (1) onto the slide (4).

8. Dry separator according to any one of claims 1 to 7
**characterised in that**
the inlet (3) is orientated in the direction of the outlet (7).

9. Dry separator according to any one of claims 1 to 8
**characterised in that**
the screw conveyor (9) is inclined approx. 30°.

## Revendications

1. Séparateur à sec (1), notamment pour séparer des corps solides, tels que des copeaux, d'un fluide, par exemple d'agents de refroidissement ou d'agents lubrifiants, avec au moins
- un réservoir de sédimentation (2),
- une alimentation (3), par l'intermédiaire de laquelle un fluide chargé de corps solides peut être amené au-dessus d'une glissière (4) agencée dans le réservoir de sédimentation (2) et remplir celle-ci,
**caractérisé en ce que**
- à l'extrémité inférieure de la glissière (4) est agencé un espace de sédimentation (5) avec une pompe aspirante (13) en amont de laquelle se trouve un filtre à fentes et arêtes (6),
- du côté du fond de l'espace de sédimentation (5) est agencée une sortie (7) pouvant être fermée au moyen d'un élément obturateur (8), un transporteur à vis sans fin (9) qui est relié à la sortie (7) du côté du fond étant agencé en dessous de l'élément obturateur (8),
- un dispositif moteur pour faire tourner le transporteur à vis sans fin (9) est prévu, lequel dispositif moteur déplace en même temps le transporteur à vis sans fin (9) de manière pendulaire, c'est-à-dire en plus en translation.

2. Séparateur à sec selon la revendication 1, **caractérisé en ce que** le filtre à fentes et arêtes (6) placé en amont de la pompe aspirante (13) est autonettoyant.

3. Séparateur à sec selon la revendication 1 ou 2, **caractérisé en ce que** le transporteur à vis sans fin (9) est conçu sans âme.

4. Séparateur à sec selon l'une des revendications 1 à 3, **caractérisé en ce que** le transporteur à vis sans fin (9) est supporté d'un seul côté.

5. Séparateur à sec selon l'une des revendications 1 à 4, **caractérisé en ce que**, à une extrémité du transporteur à vis sans fin (9) qui est opposée à la sortie (7), il est prévu un dispositif de pelletisation pour agglomérer les particules solides séparées.

6. Séparateur à sec selon l'une des revendications 1 à 5, **caractérisé en ce qu'**un dispositif de séchage et/ou de chauffage est agencé dans la zone du transporteur à vis sans fin (9).

7. Séparateur à sec selon l'une des revendications 1 ou 6, **caractérisé en ce qu'**une paroi déflectrice (11) est agencée en face de l'alimentation (3), laquelle paroi déflectrice dévie le fluide amené au séparateur à sec (1) sur la glissière (4).

8. Séparateur à sec selon l'une des revendications 1 à 7, **caractérisé en ce que** l'alimentation (3) est orientée en direction de la sortie (7).

9. Séparateur à sec selon l'une des revendications 1 à 8, **caractérisé en ce que** le transporteur à vis sans fin (9) est incliné de 30° environ.
